# EUROPEAN PATENT APPLICATION

(11) **EP 1 531 148 A1**
(43) Date of publication of application: **18.05.2005**
(21) Application number: 03425736.0
(22) Date of filing: 14.11.2003
(51) Int. Cl.: C04B 20/00, C04B 14/06, C04B 14/42

(54) **A panel in particular for raised flooring and a process for manufacturing said panel**

(71) Applicant: I.C.R.S. Industrial Ceramic Reinforcement Solution S.r.L., 20122 Milano (IT)
(72) Inventor: Giuliani, Giacinto, 16035 Rapallo (Genova) (IT)
(74) Representative: Lunati, Vittoriano

(57) **Abstract**

It is disclosed a panel (1) of the type comprising at least one concrete layer (7) having at least cement (8), inert material (9), and additives (10a, 10b) as its components and comprising a microreinforcement made of fibres (1) resisting to tensile stresses, the inert material (9) having sizes selected in a manner adapted to reduce porosity of the concrete layer (7). The process provides for said components to be bound to each other through a microreinforcement made of fibres (11) resisting to tensile stresses and to be compacted together at high pressure through a pressing step (20) adapted to reduce porosity of the concrete layer.

## Description

The invention relates to a panel in particular for raised flooring and to the process for manufacturing said panel, of the type pointed out in the preamble of the independent Claims.

The panel defines the high covering layer of the raised flooring, also called "floating" flooring, that at the lower part thereof has a hollow space for passage of cables and various installations.

It is known that raised floors are for example widespread in offices, shopping centres, data processing centres, industrial central stations, banks, hospitals, laboratories, and generally in all cases in which passage and switching of many cables is required and several installations are to be routed, such as electric, electronic and telephone installations, data and communication switching equipment and also waterworks, pneumatic installations, gas pipe networks, etc.

A raised flooring generally comprises posts or columns of adjustable height that are directly anchored to the raw floor. The upper column ends bear crosspieces that in turn form a support for the covering panels such disposed as to define a continuous plane.

Thus a hollow space is formed between the covering panels and raw floor, along which the above mentioned installations are caused to pass.

These types of flooring are very advantageous because they enable both the different installations to be switched in a precise and efficient manner to the individual users, and a great number of cables and ducts to be conveyed without hindering passage of persons and vehicles, and also because they allow prompt and easy adaptation of the installations to new requirements.

In fact, in order to renovate a given environment, as regards the facilities that can be supplied, it is sufficient to lift the covering panels and redefine the distribution of the installations placed in the hollow space included between the raw floor and the covering panels themselves.

A raised flooring also has the advantage of allowing a quick and simple change of the trampling surface in order to vary the physical features, strength and colours thereof.

Beside the above listed qualities, the mentioned known art also has some important drawbacks.

In fact creation of hollow spaces under the floor with the possibility of lifting the panels and positioning them again in case of renovation or new requirements calls for demanding and expensive functional features to be provided by said raised flooring which features must be much higher than those of the panels or tiles for normal flooring directly resting on the raw floor over the whole extension thereof.

Panels in raised flooring are in fact disposed on localised supports and therefore must be able to withstand even important bending efforts. In fact it is possible for a furnishing element or an apparatus to mainly rest on a portion of a panel that is not directly supported.

Panels for raised flooring are then required not to oscillate either in a direction parallel to the trampling surface or in a direction perpendicular thereto and this in spite of the fact that they are substantially devoid of permanent fastening elements, have important thermal expansions, connected with seasonal changes of climate and are subjected to an important wear at their edges when frequent renovations take place.

To meet this requirement a raised flooring has relatively complicated structures that are defined by different elements functionally co-operating with each other.

For example, a panel structure is spread that is based on arrangement of substantially three layers.

The first or upper layer, that is the layer in sight, is made of valuable and/or aesthetically agreeable materials, or such arranged as to be adapted to the place where it is used, for example defined by porcelainised grès or antiacid resins for chemical laboratories, by rubber for antiskid regions, etc.

The second layer is the one forming the panel thickness and is generally of a cheap material, wood, chipboard, wood and resin mix, concrete filler, calcium sulphate CaSO₄ (gypsum) reinforced with inclusions, etc., for example.

The third layer defines the lower face of the panels and is generally of metal, aluminium or steel for example.

This structure therefore gives the panels the necessary resistance to efforts and also offers a lower resting surface that is smooth and flat.

The composite panels defined by said layers are also associated with peripheral protections or joints or edge elements provided with elastic properties, made of rubber or plastic material for example, so that the same edge elements absorb and compensate for clearances and spaces present between the panels and offer steadiness and noiselessness to the flooring.

Mounting of said different components or layers in fact causes some small size inaccuracies that are compensated for or absorbed by said edge elements.

The edge elements provided with elastic properties also have the function of controlling thermal expansions, so that the latter may occur without giving rise to breaking or bending of the panels.

A further quality is represented by the fact that there is a reduction in the wear of the panel edges due to frequent lifting and new positioning of the panels themselves.

Alternatively or in combination with the edge elements, the support crosspieces have protrusions and ribs to be fitted between the panels and allowing the latter to be accommodated in a precise manner and without oscillations.

Therefore, on the whole known panels have a satisfactory functional character but their structure is complicated, heavy, and of high costs and also the production process must make available several components very different from each other.

Under this situation the technical task underlying the present invention is to devise a panel and a process for manufacture of same that are able to substantially obviate the mentioned drawbacks.

Within the scope of this technical task it is an important aim of the invention to devise a panel of simple structure, low cost and high resistance to efforts and wear.

Another aim of the invention is to devise a covering panel that while being of high performance, has reduced thickness and weight.

A further important aim of the invention is to devise a panel that, due to its features and physical properties, ensures a maximum dimensional stability and accuracy in laying.

A still further aim of the invention is to devise a panel that while being manufactured in a substantially standardised manner and based on a reduced number of components homogeneous with respect to each other, can offer a great variety of implementations adapted to the different requirements of use.

The technical task mentioned and the aims specified are achieved by a panel in particular for raised flooring and by a process for manufacture of the panel as claimed in the independent Claims.

Preferred embodiments are highlighted in the sub-claims.

Further features and advantages are pointed out hereinafter by the detailed description of preferred embodiments of the invention, with reference to the accompanying drawings, in which:
- **Fig. 1** is a diagrammatic perspective view taken as a whole of a structure known by itself of a raised flooring showing the constituent elements of a covering panel also known by itself in an exploded view;
- **Fig. 2** is a perspective view of a panel in accordance with the invention taken as a whole and in an isolated position;
- **Fig. 3** is a diagrammatic elevation side view of a portion of the panel in Fig. 2, including a view in split to highlight the inner components thereof; and
- **Fig. 4** is a flow chart of the different steps taking place in the process in accordance with the invention, to manufacture the panel shown in Fig. 2.

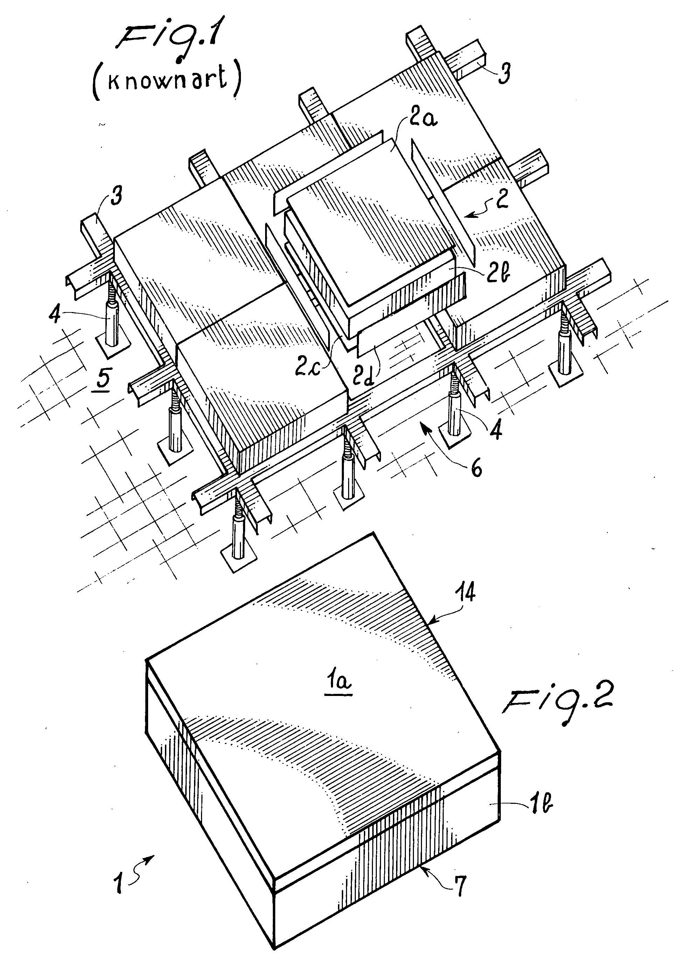

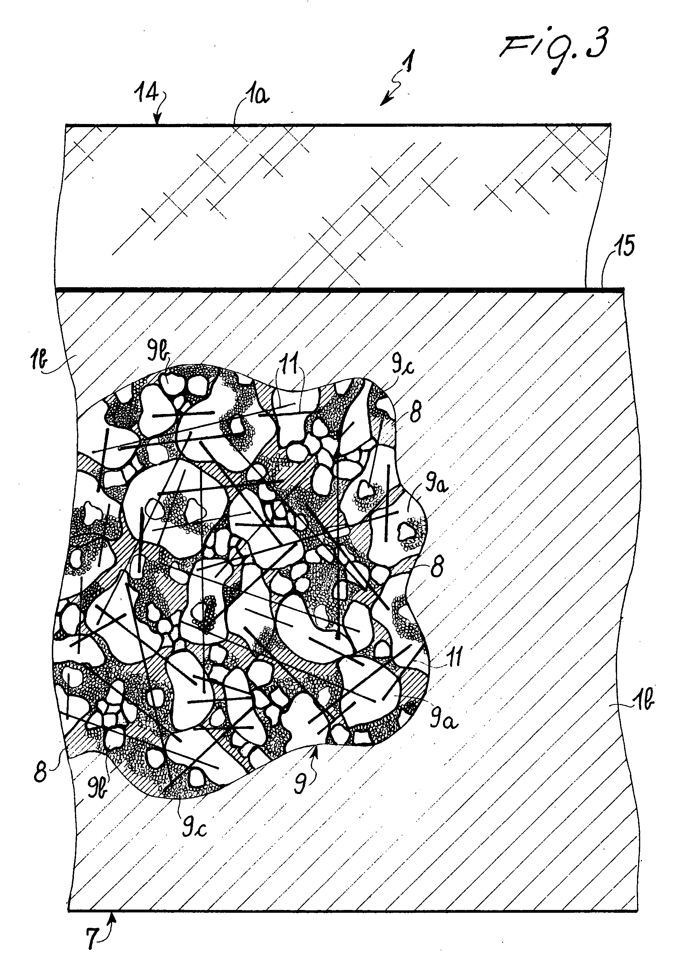

With reference to Figs. 2 to 4, the panel in accordance with the invention is generally identified by reference numeral **1**.

It is compared with a panel **2** known by itself shown in an exploded view in Fig. 1 and comprising three layers and edge elements.

In particular the known panel 2 has a first layer **2a** defining the surface features of the panel, a second layer **2b** establishing the panel thickness and made of an inexpensive material having limited strength properties, and a third layer **2c** defining the lower face and made of a metal plate to give the panel the necessary resistance to efforts and also a smooth and flat lower resting surface.

The edge elements are denoted at **2d** and are peripheral protections adapted to absorb and compensate for clearances and spaces present between the panels, to control thermal expansions and also to reduce wear of the panel edges due to frequent lifting and new positioning of same.

The panel bears on a series of crosspieces **3** kept raised by posts or support columns **4** of adjustable height, that are directly anchored to the raw floor **5**.

Thus a hollow space **6** is formed between the crosspieces 3 and raw floor 5, along which hollow space the cables and ducts of different installations are caused to pass.

Crosspieces 3, columns 4 and generally the whole support structure of the panels do not concern the present invention and can be made in any convenient manner.

In accordance with the present invention, panel 1 is of the type comprising at least one concrete layer **7**. Preferably it also comprises an upper or surface layer.

The concrete layer 7 in accordance with the present invention constitutes the load bearing layer of panel **1** and has components such as cement **8,** inert material **9,** solid **10a** and liquid **10b** additives and in addition - in an original manner - a microreinforcement **11** made of fibres resisting to tensile stresses.

In more detail, fibres **11** are selected from glass yarn, metallic fibres and synthetic fibres of plastic material also variously mixed with each other. Preferably they are made of a glass yarn of the alkaline-resistant type (AR), having a high content of zirconium oxide ZrO₂, capable of resisting to alkaline attacks.

This yarn can be dispersed in the cement or inert material and is structured in the form of continuous filaments of a diameter of twelve - fourteen microns on an average and a length preferably included between three millimetres and twelve millimetres.

In addition the fibres 11 are in an amount included between two and twenty-five percent of the weight of the concrete layer 7, of four percent for example.

A property of these fibres is their tendency to a strong and homogeneous dispersion in a wet or aqueous solution, such as a concrete material being formed, so as to determine an interlacing of threads making a solid and thick microreinforcement in the concrete layer 7.

Tendency to dispersion is due to the presence of a binder between the fibres that in an aqueous medium acts like a repellent between the fibres.

The inert material 9 advantageously has conveniently selected sizes so as to reduce porosity of the concrete layer 7.

In fact the inert material 9 is of various sizes and comprises granules having diversified sizes complementary with each other.

In this way even the gaps between the granules of bigger sizes are potentially occupied and filled so as to limit and substantially eliminate the porosity of the concrete material.

The minimum porosity also allows to obtain very smooth surfaces, a greater strength and substantially the absence of points of breaking initiation.

In particular, the inert material 9 comprises three aggregates: a big aggregate **9a** including granules having sizes substantially included between ten millimetres and two millimetres, a medium aggregate **9b** including granules having sizes substantially included between one millimetre and half a millimetre and a thin aggregate or filler **9c** including granules having sizes substantially included between five hundredths of a millimetre and one hundredth of a millimetre.

Therefore, the medium aggregate 9b can easily enter the spaces left free by the big aggregate 9a and the thin aggregate 9c can enter any region not engaged by the other inert material.

With respect to the overall weight of the concrete layer 7, the big aggregate 9a is in an amount substantially included between twenty and thirty-five percent, the medium aggregate 9b is in an amount substantially included between ten and twenty percent, and the thin aggregate 9c is in an amount substantially included between fifteen and twenty-five percent.

Therefore, the amounts of the different aggregates are substantially similar to each other, although they are not the same.

The amount of the thin aggregate 9c practically consisting of powder appears to be relatively very high. This amount is in fact similar to the amount of the big aggregate 9a and similar to or preferably greater than the amount of the medium aggregate 9b.

The inert material 9 is also provided to be formed of elements of high quality each capable of giving satisfactory results when wear and abrasion tests are carried out.

For example, the big aggregate 9a consists of basalt and/or porphyry and/or quartz; the medium aggregate is sand or the like; and the thin aggregate is a ground material consisting of the same materials forming the other aggregates and /or of siliceous and/or calcareous materials.

The solid 10a and liquid 10b additives can be selected from many additives made available by the known art and preferably they are all together in amounts substantially included between one and five percent of the overall weight of the concrete layer 7. Possibly said additives can be omitted.

Cement 8 is preferably a quick-setting cement.

An important feature of the concrete layer 7 in accordance with the invention is then that of having its components under conditions of great mutual compacting.

The provided compacting is that determined by pressures of at least five hundred metric tons (weight) per square meter, equivalent to about 5 million Newton per square meter, exerted on said components placed in a mould **12**.

These big pressures can be obtained through appropriate presses used in the ceramic field, for moulding clays and the like, for example.

Then to enable formation of the concrete layer 7, the latter obviously has water as the base component, the amounts of which are controlled both as regards the starting mixing of the components and as regards pressing and compacting of same through said presses, and finally as regards drying or curing in an appropriate thermal chamber **13** of the hot air type for example, as better specified in the following.

By way of example, the starting components of a concrete layer being formed can be the following, in percentages on the overall weight:
- big aggregate: 20%
- medium aggregate: 10%
- thin aggregate: 15%
- cement: 25%
- water: 25%
- glass yarn: 4%
- various additives: 1%

The covering panel 1 for raised flooring preferably comprises, in addition to the concrete layer 7 described above and embodying the load bearing layer, an upper or surface layer **14** defining the face **1a** of panel 1 that is in sight and therefore represents the surface aspect and features of panel 1, as well as the functional character in relation to the environment in which it is inserted.

This upper layer 14 is made of any appropriate material, a ceramic or non ceramic material. For example, the material is selected from ceramic grès, antiacid resins, PVC, wood, and an ecological coating including titanium oxide TiO₂.

The upper layer 14 has the feature of being integral in an irremovable manner with the concrete layer 7, in a manner adapted to define a single manufactured article therewith.

Engagement with the concrete layer 7 is obtained through a glue **15** spread on top of the concrete layer 7 or on the base of the upper layer 14 and through subsequent mutual pressing of the two layers.

Pressures for pushing the two layers against each other can be limited and the glue 15 is a binding agent for use with concrete, the adhesive called H40® available from Kerakoll international Rotterdam, for example.

At all events the two layers form a single manufactured article and are sent together for carrying out the finishing operations.

In particular the upper layer 14 and concrete layer 7 jointly define side edges **1b** transverse to the face in sight 1a and are jointly ground at said side edges 1b.

The invention also teaches a new process for manufacturing a panel in particular for raised flooring.

It is therein provided that a panel 1 should have a concrete layer 7 in which the components such as cement 8, inert material 9 and various additives are bound to each other through a microreinforcement made of fibres resisting to tensile stresses and are compacted with each other at high pressure through a pressing step in a manner adapted to reduce porosity of said concrete material.

In particular said components are bound to each other by fibres that can be of any type and that preferably are made of glass yarn of the alkaline-resistant (AR) type.

In the pressing step said components are inserted in a mould and submitted to a pressure of at least five hundred metric tones per square meter. Preferably pressures are included between five hundred and one thousand and five hundred metric tons per square meter.

In addition, it is important to notice that the inert material 9 is selected with granules having diversified sizes in a manner adapted to limit the presence of gaps between said granules and preferably the inert material is selected with three differentiated sizes the amounts by weight of which are similar to each other, the intermediate size being substantially defined by sand.

The process also involves stages in which the concrete layer 7 is submitted, after pressing, to a step of drying and curing at controlled temperature and humidity.

While the concrete layer 7 may form the whole panel 1, possibly completed with a mere painting, it is preferable for the concrete layer to be engaged in an irremovable manner, by gluing and pressing, with an upper layer 14, so as to form a single article of manufacture.

Engagement may take place either immediately after the pressing operations carried out on the concrete layer 7 and before the latter being dried or cured in the thermal chamber 13 or, when the upper layer consists of ceramic grès, concurrently with a high-pressure pressing operation.

The unitary structure makes it advantageous to carry out a final step in which the concrete layer 7 and upper layer 14 are jointly submitted to a grinding step to define the dimensional features of the panel.

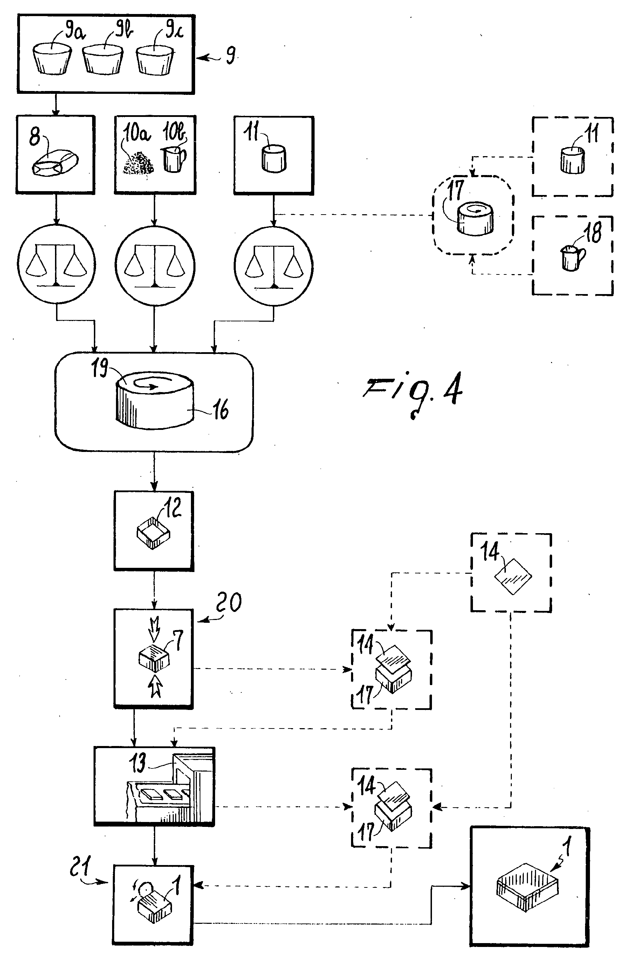

In detail, the preferred manufacturing steps of panel 1 are shown in Fig. 4.

In a first step the inert material 9 - with the big aggregate 9a, medium aggregate 9b and thin aggregate 9c - is mixed with cement 8 and these components, in an exactly batched amount to be also obtained by electronic weighing, are inserted in a mixer 16 having a controlled humidity.

Inserted in the same mixer 16 after batching, are possible solid 10a and/or liquid 10b additives.

In an auxiliary step the glass yarns or equivalent reinforcing fibres 11 are inserted in mixer 16 as well.

Batching of fibres 11 can take place in two ways.

The first way is by a dry route: fibres 11 are gradually fed into appropriate containers, through Archimedean screws for example, and accurately weighed. Then the weighed amounts are inserted in mixer 16.

The second way is by liquid route and is identified by chain lines: fibres 11 are inserted in a tank 17 together with water 18 and then the water and fibre solution is batched with a litre-counter and inserted in mixer 16.

The last-mentioned procedure allows also further amounts of solid or liquid additives to be easily inserted in tank 17.

If fibres 11 are inserted by dry route, mixer 16 too is substantially dry operated and the humidity necessary to obtain a mixture **19** is drawn from the liquid additives.

The obtained mixture 19 is unloaded, by mere gravimetric filling, into said moulds 12 substantially having the shape of panels 1 to be formed.

Carried out in said moulds 12 is the pressing step denoted at **20** during which the concrete layer being formed is submitted to high pressures, higher than five hundred metric tons per square meter, with extraction of at least par of the excess water and extreme compacting of the components therein present.

This exceptional compacting substantially eliminates the residual porosity of the concrete material.

The concrete layer 7 at this point is substantially formed, except for further submitting it to a drying and/or curing operation in the thermal chamber 13 having a controlled temperature and humidity and a hot-air operation, for example.

In the thermal chamber 13 the humidity must be further removed or is supplied if a substantially dry process has been carried out.

The residence time in the thermal chamber depends on the features of the concrete layer inserted therein. Just as an indication, it is of about twelve hours on an average.

At this point of the process or also in a preceding step, application of the upper layer 14 prepared in an independent manner, occurs.

The upper layer 14, if applied at this point of the process, is glued to and pressed against the concrete layer 7.

If applied in a previous time, the upper layer 14 can be placed on the concrete layer 7 being formed before the latter is submitted to the pressing step 20 and it is this pressing step that performs the function of permanently engaging the layers with each other. In this case the two layers are both and jointly sent to the thermal chamber 13.

After a steady union of layers 7 and 14 and completion of same, panel 1 is sent to a final grinding step **21** at which it is perfectly trimmed at the side edges 1b.

A further finishing step of the face in sight 1a is also possible.

The invention achieves important advantages.

In fact a panel 1 has been manufactured which is provided of high functional and mechanical features, surprisingly given by a concrete layer.

In fact once finished, the concrete layer appears to be very solid and reliable: it has a density of at least one thousand and seven hundred kilos per cubic meter and a resistance to a concentrate load of at least ten Kn.

The panel is then advantageous because it appears to be provided with the greatest dimensional stability, due to its concrete structure. Therefore it does not show important expansions and shrinkages bound to the environmental temperature and does not require peripheral protections.

In addition it has a great dimensional precision both due to said grinding step and to the fact that inaccuracies in mounting to not exist, since the concrete layer and upper layer are joined together.

Further important advantages are connected with the fact that there are no elements contributing to fire and therefore it is greatly fire-proof.

It also has a complete absence of water absorption and therefore a maximum waterproofness is ensured.

The panel is then relatively light-in-weight and above all it is simple and inexpensive and can be widely used.

The invention is susceptible of variations falling within the inventive idea. For example, the part in view of panel 1 can be of any structure and the shape or finishing of this structure can be variously arranged to obtain decorative patterns or effects. The decorative effects are obtainable for example by elements made by moulding and possibly superposed on the upper layer 14 or combined therewith.

In addition panel 1 is also usable out of the raised flooring field, as a coating for outer or inner walls for example, or to make architectonic structures, as it is in any case useful and advantageous due to its functional and mechanical features and to its low cost.

## Claims

1. A panel (1) in particular for raised flooring, of the type comprising at least one concrete layer (7) having at least cement (8), inert material (9), and additives (10a, 10b) as its components, **characterised in that** it comprises a microreinforcement made of fibres (11) resisting to tensile stresses, and **in that** said inert material (9) has sizes selected in a manner adapted to reduce porosity of said concrete layer (7).

2. A panel as claimed in Claim 1, wherein said fibres (11) are a glass yarn of the alkaline-resistant (AR) type.

3. A panel as claimed in Claim 1, wherein said fibres (11) are in an amount of at least two percent of the weight of said concrete layer.

4. A panel as claimed in Claim 1, wherein said inert material (9) consists of granules having diversified sizes in a manner adapted to limit the presence of gaps between said granules.

5. A panel as claimed in Claim 1, wherein said inert material (9) comprises a big aggregate (9a), a medium aggregate (9b) having smaller sizes than those of said big aggregate (9a) and substantially defined by sand, and a thin aggregate (9c) having smaller sizes than those of said medium aggregate (9b) and in an amount by weight similar to or greater than that of said medium aggregate (9b).

6. A panel as claimed in Claim 5, wherein said big aggregate (9a) includes granules having sizes included between ten and two millimetres, said medium aggregate (9b) includes granules having sizes included between one millimetre and half a millimetre, and said thin aggregate (9c) includes granules having sizes included between five hundredths and one hundredth of a millimetre.

7. A panel as claimed in Claim 5, wherein, with respect to the weight of said concrete layer (7), said big aggregate (9a) is in an amount substantially included between twenty and thirty-five percent, said medium aggregate (9b) is in an amount substantially included between ten and twenty percent, and said thin aggregate (9c) is in an amount substantially included between fifteen and twenty-five percent.

8. A panel as claimed in Claim 1, wherein said components of said concrete layer (7) are under compacting conditions as determined by pressures of at least five hundred metric tons per square meter.

9. A panel as claimed in Claim 1, comprising an upper layer (14) of a material selected at least from ceramic gres, antiacid resins, PVC, wood, and ecological coating including titanium oxide TiO₂, said upper layer (14) defining a face in sight (1a) of said panel (1).

10. A panel as claimed in Claim 9, wherein said upper layer (14) is integral with said concrete layer (7) by gluing and pressing, in a manner adapted to define a single manufactured article with said concrete layer (7).

11. A panel as claimed in Claim 10, wherein said upper layer (14) and concrete layer (7) jointly define side edges (1b) transverse to said face in sight (1a) and ground.

12. A process for manufacturing a panel in particular for raised flooring, of the type comprising at least one concrete layer (7) having at least cement (8), inert material (9), and additives (10a, 10b) as its components, **characterised in that** said components are bound to each other through a microreinforcement made of fibres (11) resisting to tensile stresses and are compacted with each other at high pressure through a pressing step adapted to reduce porosity of said concrete layer (7).

13. A process as claimed in Claim 12, wherein in said pressing step (20) said components are submitted to pressures of at least five hundred metric tons per square meter, in a mould (12).

14. A process as claimed in Claim 12, wherein said components are submitted to pressures substantially included between five hundred and one thousand and five hundred metric tons per square meter.

15. A process as claimed in Claim 12, wherein said inert material (9) is selected from granules having diversified sizes in a manner adapted to limit the presence of gaps between said granules.

16. A process as claimed in Claim 15, wherein said inert material (9) is selected from at least three sizes differentiated from each other and in amounts by weight similar to each other, and wherein the medium aggregate is substantially defined by sand.

17. A process as claimed in Claim 12, wherein said concrete layer is submitted, after said pressing step (20), to a drying and curing step at controlled temperature and humidity.

18. A process as claimed in Claim 12, wherein said concrete layer (7) is in engagement in an irremovable manner with an upper layer (14) by gluing and mutual pressing.

19. A process as claimed in Claim 18, wherein said concrete layer (7) and upper layer (14) are jointly submitted to a grinding step (21) to define their size features.
